# EUROPEAN PATENT APPLICATION

(11) **EP 4 033 435 A1**
(43) Date of publication of application: **27.07.2022**
(21) Application number: 20865110.9
(22) Date of filing: 10.03.2020
(51) Int. Cl.: G06Q 20/36, G06Q 20/06, G06Q 20/10, G06Q 20/02, G06Q 20/40

(54) **ELECTRONIC FINANCIAL TRANSACTION SYSTEM EMPLOYING CRYPTOCURRENCY AND PAYMENT METHOD USING SAME**

(30) Priority: 17.09.2019 KR 20190114103
(71) Applicant: Phillips Multi Co., Ltd, Seoul 05614 (KR)
(72) Inventor: CHOI, Gi Jai, Jeonju-si Jeollabuk-do 55092 (KR)
(74) Representative: Wunderlich & Heim Patentanwälte Partnerschaftsgesellschaft mbB
(86) International application number: PCT/KR2020/003327
(87) International publication number: WO 2021/054553

(57) **Abstract**

Disclosed are: an electronic financial transaction system employing a cryptocurrency, the system allowing an electronic financial transaction through a cryptocurrency at an automated teller machine or an on/offline store where the use of a cryptocurrency is not allowed; and a payment method using same. To this end, the present invention provides an electronic financial transaction system employing a cryptocurrency, the system comprising: a user terminal for requesting an electronic financial transaction by a cryptocurrency registered by a user; and an exchange server which, upon a request from the user terminal, analyzes an amount of the cryptocurrency corresponding to a target price of the electronic financial transaction according to a real-time market price of the cryptocurrency registered by the user, and makes a settlement of the electronic financial transaction by that said amount of the cryptocurrency. According to the present invention, a user can make an electronic financial transaction such as purchasing a product or a service by a holding cryptocurrency or exchanging the holding cryptocurrency for cyber money by applying a real-time market price without exchanging a cryptocurrency holding for investment for a fiat currency.

## Description

### [Technical Field]

The present invention relates to an electronic financial transaction system capable of performing electronic financial transactions by using a cryptocurrency which may be transacted only in a cryptocurrency exchange and a payment method using the same and, more particularly, to an electronic financial transaction system using a cryptocurrency, which enables electronic financial transactions through a cryptocurrency even in an automated teller machine (ATM) or on/offline stores in which a cryptocurrency cannot be used, and a payment method using the same.

### [Background Art]

In the past, when currency was not present, economic activities were performed through a barter deal. Thereafter, as time passes, currency such as coins and bills was generated, and most of economic activities were performed through the currency. Furthermore, as the technology is advanced and digitalized, the concept of new currency, such as a cryptocurrency, has emerged. Such a cryptocurrency, as the word itself, means immaterial currency in a virtual environment unlike fiat currency (coins or bills) that is actually transacted.

Recently, among cryptocurrencies, an enciphering cryptocurrency (hereinafter abbreviated as a "cryptocurrency") represented by "Bitcoin" was developed and distributed.

The cryptocurrency, unlike the existing cryptocurrency, operates based on peer to peer (P2P). In such a cryptocurrency, when a transaction is completed, a new block functioning as a ledger is generated, and is connected to the existing block. Furthermore, a time stamp is recorded for each new block. The time stamp becomes information that evidences the time when the transaction was performed.

The cryptocurrency includes about 700 types. In addition to the representative "Bitcoin", cryptocurrencies relatively actively transacted include "Ethereum", "Ripple", "Dash", "Litecoin", etc. The cryptocurrencies except Bitcoin are also called Altcoins.

Meanwhile, in a credit card or various types of simple payment, the transaction of cash is performed in a way that a use amount is withdrawn from a payment account deposited into a bankbook and an account transfer is performed. However, a product can be bought and sold using only a cryptocurrency even without cash.

The transactions of such a cryptocurrency are performed in cryptocurrency exchanges, such as "Bithumb", "Korbit", and "Coinone" in Korea and "Huobi" and "Binance" in foreign countries. The cryptocurrency exchange is composed of a system in which a desired cryptocurrency is purchased by depositing the amount of money corresponding to a virtual account of a user, and enables a cryptocurrency to be kept in an electronic wallet and to be transacted.

Furthermore, the transactions of a cryptocurrency are also performed using a method of exchanging cryptocurrencies over a network, through the Internet or a QR code. Cryptocurrency may also be bought/sold even in a cryptocurrency-dedicated ATM. Meanwhile, transactions of a cryptocurrency may include directly payment using a stable cryptocurrency (cybermoney, etc.) fixed to a real-time price even without using a QR code and the conversion and exchange of each price into a different smartphone, an electronic (IT) product, etc.

However, on/offline stores in which a product can be bought using a cryptocurrency are very few and are not generalized. Payment using such a cryptocurrency is performed in a way to directly exchange cryptocurrencies between a user and a store. Accordingly, there is a problem in that an accurate amount of payment according to the occurrence of a profit and loss attributable to a price change is not performed.

### [Disclosure]

### [Technical Problem]

Accordingly, a first object of the present disclosure is to provide an electronic financial transaction system using a cryptocurrency, wherein the quantity of a cryptocurrency necessary for an electronic financial transaction may be calculated in association with a real-time market price of the cryptocurrency and used for the electronic financial transaction.

Furthermore, a second object of the present disclosure is to provide a payment method using an electronic financial transaction system, which enables a cryptocurrency to be used for payment for a product or a service by incorporating a real-time market price of the cryptocurrency even without exchanging cryptocurrencies held in an electronic wallet.

### [Technical Solution]

In order to achieve the first object of the present disclosure, the present embodiment of the present disclosure provides an electronic financial transaction system using cryptocurrency, including a user terminal which requests an electronic financial transaction using a cryptocurrency registered by a user, and an exchange server which analyzes a quantity of the cryptocurrency, corresponding to a target price for an electronic financial transaction, based on a real-time market price of the cryptocurrency registered by the user in response to a request from the user terminal and calculates the electronic financial transaction by using the quantity of the cryptocurrency.

Furthermore, in order to achieve the second object of the present disclosure, the present embodiment of the present disclosure provides a settlement method using an electronic financial transaction system, including an electronic wallet generation step of generating and providing, by an exchange server, an electronic wallet to a user who accesses the exchange server through a user terminal and is registered as a member, a cryptocurrency registration step of registering, by the exchange server, a cryptocurrency with the electronic wallet in response to a request from the member, a payment request step of requesting, by the user terminal that has accessed the exchange server in which an online shopping mall has been constructed, settlement using the cryptocurrency registered with the electronic wallet in relation to a commercial transaction during an electronic financial transaction, a quantity analysis step of analyzing, by the exchange server, a quantity of a cryptocurrency corresponding to a settlement price for a commercial transaction based on a real-time market price of the cryptocurrency whose settlement has been requested, and a balance accounts step of calculating, by the exchange server, the settlement price by using the quantity of the cryptocurrency among cryptocurrencies registered with the electronic wallet.

### [Advantageous Effects]

According to the present disclosure, an electronic financial transaction, such as purchasing a product or a service by using a cryptocurrency held for investment or changing the holding cryptocurrency into cybermoney based on a real-time market price although the cryptocurrency is not changed into fiat currency, can be performed.

Furthermore, the present disclosure enables a cryptocurrency to be used like cash by constructing an environment in which a cryptocurrency can be used to buy a product or a service in an offline way in addition to an online way.

Moreover, according to the present disclosure, a cryptocurrency can be provided to a seller at a settlement price or a cryptocurrency can be changed into fiat currency, which can be provided to a seller, depending on the seller's selection.

Furthermore, according to the present disclosure, the exchange and withdrawal of a cryptocurrency can be performed through an offline ATM, etc., and a cryptocurrency can be transacted through an offline ATM, etc.

Furthermore, according to the present disclosure, a product or a service can be bought at a real-time cryptocurrency price in an exchange through an electronic financial transaction even without installing a QR code, etc. in an electronic system or an external device.

As described above, according to the present disclosure, payment can be directly performed at a real-time cryptocurrency price by using a real-time cryptocurrency payment system. Cryptocurrency can be changed into cash and used. Cryptocurrency having a real-time price can be changed into cybermoney having a stable price, and the changed cybermoney can be used in a common payment system. Furthermore, the changed cybermoney having the stable price can be changed into a cryptocurrency having a real-time price again.

### [Description of Drawings]

FIG. 1 is a configuration diagram for describing an electronic financial transaction system according to a first embodiment of the present disclosure.
FIG. 2 is a configuration diagram for describing an electronic financial transaction system according to a second embodiment of the present disclosure.
FIG. 3 is a configuration diagram for describing an electronic financial transaction system according to a third embodiment of the present disclosure.
FIG. 4 is a configuration diagram for describing an embodiment of an exchange server according to the present disclosure.
FIG. 5 is a configuration diagram for describing an embodiment of a cryptocurrency management unit according to the present disclosure.
FIG. 6 is a configuration diagram for describing an embodiment of a game service unit according to the present disclosure.
FIG. 7 is a flowchart illustrating a flow of a balance accounts method for electronic financial transactions according to the present disclosure.

### [Mode for Invention]

Hereinafter, an electronic financial transaction system using a cryptocurrency (hereinafter abbreviated as an "electronic financial transaction system") according to preferred embodiments of the present disclosure is described in detail with reference to the accompanying drawings.

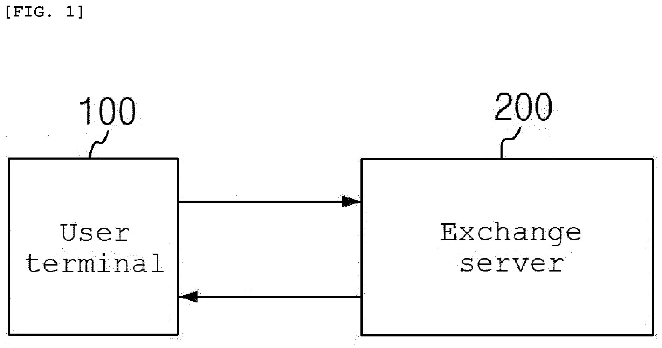

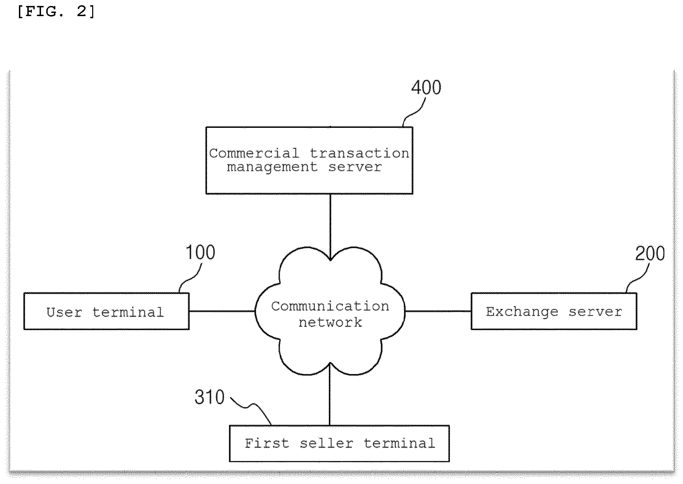

FIG. 1 is a configuration diagram for describing an electronic financial transaction system according to a first embodiment of the present disclosure. FIG. 2 is a configuration diagram for describing an electronic financial transaction system according to a second embodiment of the present disclosure.

Referring to FIGS. 1 and 2, the electronic financial transaction system according to the present disclosure includes a user terminal 100 that receives, from a user, a request to use a cryptocurrency in relation to an electronic financial transaction and that transmits the request, and an exchange server 200 that is connected to the user terminal 100 over a wired/wireless communication network (hereinafter abbreviated as a "communication network") and that settles an electronic financial transaction by using a cryptocurrency in response to a request from the user terminal 100.

The electronic financial transaction system may further include a first seller terminal 310 that accesses the exchange server 200 online and provides selling information related to the selling of a product or a service. Furthermore, the electronic financial transaction system may further include a commercial transaction management server 400 that analyzes the quantity of a cryptocurrency corresponding to a settlement price of a commercial transaction based on a real-time market price of the cryptocurrency registered by a buyer.

Furthermore, the electronic financial transaction system may further include a second seller terminal 320 that recognizes a personal identification code provided by a user offline and that transmits selling information, and a settlement agency server 500 that relays the selling information. In this case, the exchange server 200 performs a role of settling an electronic financial transaction by using a cryptocurrency corresponding to a target price for the electronic financial transaction in an electronic wallet of the user based on the selling information provided by the settlement agency server 500.

Hereinafter, each of the components is more specifically described with reference to drawings.

Referring to FIGS. 1 and 2, the electronic financial transaction system according to the present disclosure includes the user terminal 100.

The user terminal 100 is a configuration that accesses the exchange server 200 over the communication network and that requests settlement by using a cryptocurrency registered by the user in relation to an electronic financial transaction.

The user terminal 100 directly accesses the exchange server 200 or accesses the exchange server 200 through the first seller terminal 310, the second seller terminal 320, etc.

The user terminal 100 accesses the exchange server 200 that operates a cryptocurrency exchange (agency) and applies for a member subscription in order to use a cryptocurrency transaction service. To this end, the user terminal 100 receives individual identification number (ID) information from a user and transmits the ID information to the exchange server 200. In this case, the ID information may include one or more of an e-mail address, a mobile phone number, an ID for login, a password, etc. The user terminal 100 may perform an e-mail authentication or mobile phone authentication procedure in order to confirm the identification of the user.

The electronic financial transaction includes the settlement of a product or a service, an account transfer, cash withdrawal, the buying of a cryptocurrency, the selling of a cryptocurrency, a cybermoney exchange, etc.

For example, the user terminal 100 may transmit account transfer information to the exchange server 200 in order to perform an account transfer for fiat currency by using a cryptocurrency online or offline.

The user terminal 100 may transmit settlement request information to the exchange server 200 in order to pay a settlement price for a product or a service by using a cryptocurrency online.

The user terminal 100 may output a personal identification code related to a cryptocurrency in order to pay a settlement price for a product or a service by using a cryptocurrency offline.

The user terminal 100 may output a personal identification code related to a cryptocurrency in order to withdraw fiat currency (cash) through an ATM, etc. offline.

The user terminal 100 may transmit exchange request information to the exchange server 200 in order to exchange a cryptocurrency and cybermoney.

When the exchange server 200 provides an electronic wallet to a user after the member subscription of the user, the user terminal 100 transmits, to the exchange server 200, cryptocurrency registration information for registering a cryptocurrency with the electronic wallet. Specifically, the user terminal 100 receives, from the user, information related to the holding cryptocurrency, and generates cryptocurrency registration information. Furthermore, the user terminal 100 transmits the cryptocurrency registration information to the exchange server 200 so that the cryptocurrency is registered with the electronic wallet.

The user terminal 100 receives, from a user, transaction request information including selection information, etc. of a cryptocurrency to be used for an electronic financial transaction so that the electronic financial transaction can be performed using a cryptocurrency registered with the electronic wallet of the user, and transmits the transaction request information to the exchange server 200. As occasion demands, if fiat currency is stored in the electronic wallet of the user, the user terminal 100 may receive, from the user, information on whether to use the fiat currency and the amount of fiat currency to be used, and may generate transaction request information.

As a first embodiment aspect, the user terminal 100 according to the present disclosure requests settlement using a cryptocurrency registered by a user in relation to a commercial transaction. As occasion demands, the user terminal 100 transmits, to the exchange server 200, transaction request information that requests settlement using a cryptocurrency registered with an electronic wallet of the user.

If the commercial transaction is performed online, the user terminal 100 transmits transaction request information to the exchange server 200 in order to pay a settlement price for a product or a service by using the cryptocurrency registered with the electronic wallet of the user.

If the commercial transaction is performed offline, the user terminal 100 may be configured to output a personal identification code associated with the electronic wallet of the user in order to request settlement using the cryptocurrency registered with the electronic wallet. To this end, a transaction-dedicated app that is associated with the electronic wallet of the user and that outputs a personal identification code, such as a QR code, may be installed in the user terminal 100 in response to a request from the user. As occasion demands, the user terminal 100 may be configured to transmit the personal identification code to a seller terminal by using a short-distance wireless communication method, such as NFC.

As described above, the user terminal 100 may access the exchange server 200 through a transaction-dedicated app (application), and may buy and sell a specific cryptocurrency at a real-time price, may change, into another cryptocurrency, a cryptocurrency registered with an electronic wallet or may pay a settlement price for a product or a service by using a cryptocurrency registered with the electronic wallet.
Furthermore, the user terminal 100 may access the exchange server 200 through a web page, and may buy and sell a specific cryptocurrency at a real-time price, may change, into another cryptocurrency, a cryptocurrency registered with an electronic wallet, or may pay a settlement price for a product or a service by using a cryptocurrency registered with the electronic wallet.

As a second embodiment aspect, the user terminal 100 according to the present disclosure may receive, from a user, transaction request information including an account transfer amount for fiat currency, a financial account number, and selection information of a cryptocurrency, and may transmit the transaction request information to the exchange server 200.

As a third embodiment aspect, the user terminal 100 according to the present disclosure may receive a buy order for a cryptocurrency or a sell order for a cryptocurrency from a user, may generate cryptocurrency transaction information, and may transmit the cryptocurrency transaction information to the exchange server 200.

As a fourth embodiment aspect, the user terminal 100 according to the present disclosure may be configured to output a personal identification code associated with an electronic wallet in order to request the withdrawal of cash by using a cryptocurrency registered with an electronic wallet and fiat currency of a user.

A smartphone, a tablet PC, a notebook computer, a personal computer, a communication terminal, etc. may be used as the user terminal 100. As occasion demands, the user terminal 100 may be implemented in the form of a card, a watch, a ring, etc. if the user terminal can access the exchange server 200 over the communication network.

Referring to FIG. 2, the electronic financial transaction system according to the present disclosure may further include the first seller terminal 310.

The first seller terminal 310 is a configuration that accesses the exchange server 200 over the communication network and that provides selling information related to the selling of a product or a service.

The first seller terminal 310 provides the exchange server 200 with selling information of a product to be sold in an online shopping mall.

Specifically, the first seller terminal 310 accesses the exchange server 200 so that a user can perform the buying of a product or a service online, and registers selling information of a product to be sold in an online shopping mall constructed in the exchange server 200. Furthermore, the first seller terminal 310 designates an electronic wallet of a seller through which a cryptocurrency corresponding to a settlement price of the product can be settled.

In this case, the first seller terminal 310 may set, in the exchange server 200, the type of currency paid to an electronic wallet of a first seller depending on the first seller's selection. For example, when the first seller accesses the exchange server 200 through the first seller terminal 310 and designates, as a cryptocurrency, the type of currency paid to the electronic wallet, the exchange server 200 pays a sale payment for a product or a service, purchased by a user, by using the cryptocurrency. Furthermore, when the first seller accesses the exchange server 200 through the first seller terminal 310 and designates, as fiat currency, the type of currency paid to the electronic wallet, the exchange server 200 pays a sale payment for a product or a service, purchased by a user, by using as fiat currency.

In other words, according to the present disclosure, a cryptocurrency can be provided to the electronic wallet of the first seller or fiat currency obtained by selling a cryptocurrency can be provided to the electronic wallet of the first seller, depending on the first seller's selection.

Referring to FIG. 2, the electronic financial transaction system according to the present disclosure may further include the commercial transaction management server 400.

The commercial transaction management server 400 is connected the first seller terminal 310 and the exchange server 200 over the communication network, receives selling information from the first seller terminal 310, and transmits settlement request information to the exchange server 200.

Specifically, the commercial transaction management server 400 analyzes the quantity of a cryptocurrency, corresponding to a sale payment, based on a real-time market price of the cryptocurrency registered with an electronic wallet of a user who has bought a product or a service. Furthermore, the commercial transaction management server 400 requests balance accounts for the sale payment from the exchange server 200 so that the balance accounts can be processed using the analyzed quantity of the cryptocurrency. In other words, the commercial transaction management server 400 generates transaction request information including cryptocurrency quantity information corresponding to a sale payment of an electronic financial transaction, and transmits the transaction request information to the exchange server 200 over the communication network.

For example, when a real-time market price of a first cryptocurrency registered with a personal identification code is 10,000 Korean won and a settlement price is 50,000 Korean won, the commercial transaction management server 400 analyzes that the quantity of the first cryptocurrency corresponding to a settlement price is 5, generates transaction request information that requests the supply of 5 first cryptocurrencies as the settlement price, and transmits the transaction request information to the exchange server 200.

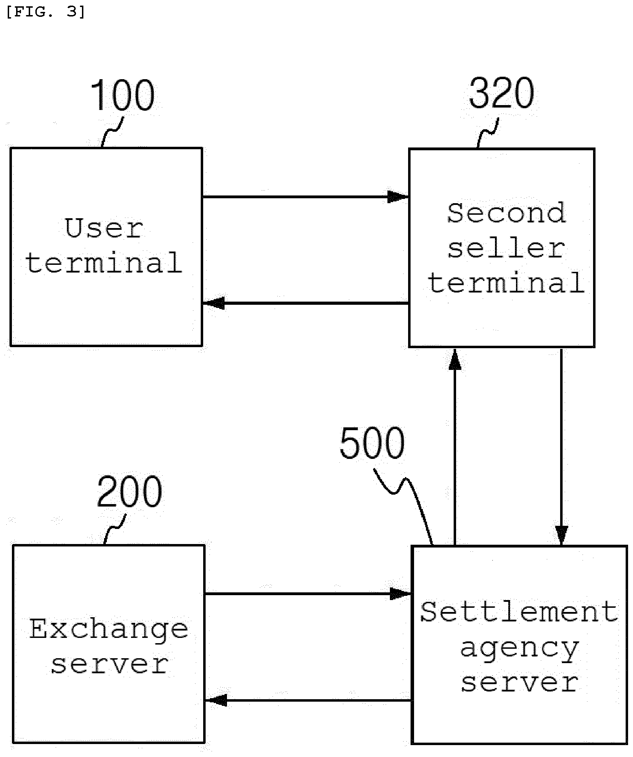

FIG. 3 is a configuration diagram for describing an electronic financial transaction system according to a third embodiment of the present disclosure. Referring to FIG. 3, the electronic financial transaction system according to the present disclosure may further include the second seller terminal 320.

The second seller terminal 320 receives a personal identification code so that a user can perform the purchase of a product or a service offline or through an online shopping mall not related to the exchange server 200. Furthermore, the second seller terminal 320 transmits, to the settlement agency server 500, selling information including the personal identification code and a settlement price.

The second seller terminal 320 installed in an offline store is connected to an identification code reader, such as a QR code reader, and receives a personal identification code of a user and an identification code (QR code or barcode) of a product from the identification code reader. In this case, a QR code or a barcode output through the user terminal 100 may be used as the personal identification code of the user.

Furthermore, the second seller terminal 320 extracts a settlement price from the identification code of the product, generates transaction request information including the personal identification code and the settlement price, and transmits the transaction request information to the settlement agency server 500.

The second seller terminal 320 associated with an online shopping mall receives the personal identification code or the aforementioned ID information from the user terminal 100. Furthermore, the second seller terminal 320 extracts the settlement price from selling information selected by the user terminal 100, generates the transaction request information including the personal identification code or ID information and the settlement price, and transmits the transaction request information to the settlement agency server 500.

Referring to FIG. 3, the electronic financial transaction system according to the present disclosure may further include the settlement agency server 500.

The settlement agency server 500 is connected to the second seller terminal 320 and the exchange server 200 over the communication network, and relays, to the exchange server 200, transaction request information provided by the second seller terminal 320.

Such a settlement agency server 500 may include a payment gateway (PG) server, a value added network (VAN) server or both.

The PG server is a server that performs online payment and settlement by proxy, and functions as a representative member store having several member stores. Specifically, small and medium-sized online shopping malls act as stumbling blocks in member store contracts because they do not have physical shops and are difficult to provide security unlike offline stores. However, the PG server solves such problems between the exchange server 200 and the second seller terminal 320, and takes some of a transaction price as a commission.

The VAN server confirms (approval business) whether an electronic wallet of a user has a sufficient limit in lieu of the exchange server 200. Furthermore, the VAN server functions to transmit (purchasing business) the data of a transaction history to the exchange server 200 after a transaction is performed normally so that a member store can receive a sale payment for a product or a service from the exchange server 200.

The electronic financial transaction system according to the present disclosure may further include an ATM.

The ATM is installed offline, for example in a bank or a convenience store. The ATM is connected to the exchange server 200 over the communication network, and provides a cash withdrawal service for fiat currency and a cryptocurrency held in an electronic wallet of a user.

The ATM recognizes a personal identification code having rights to access a withdrawal account, assigns withdrawal rights, and pays an input amount within a limit amount of the withdrawal account. In this case, the withdrawal account is assigned to each electronic wallet of a user. The limit amount is calculated as a total of fiat currency and a cryptocurrency held in the electronic wallet. In this case, the ATM may request the selling of a cryptocurrency from the exchange server 200 in response to a request from the user, and may provide fiat currency obtained by selling the cryptocurrency.

As occasion demands, the ATM may generate cryptocurrency selling request information in response to a request from a user, and may transmit the cryptocurrency selling request information to the exchange server 200. More specifically, the cryptocurrency selling request information includes a request to sell a cryptocurrency held in an electronic wallet of the user or a request to purchase a cryptocurrency using fiat currency held in the electronic wallet of the user or both.

When a card in which a personal identification code associated with the electronic wallet has been embedded is inserted and a transaction request signal for the cryptocurrency is received, the ATM transmits the transaction request signal to the exchange server 200. In this case, the exchange server 200 buys the cryptocurrency in response to the transaction request signal and registers the cryptocurrency with the electronic wallet or sells a cryptocurrency held in the electronic wallet.

The electronic financial transaction system according to the present disclosure may further include a kiosk.

The kiosk is installed at an offline place, such as a street or a public office, and is connected to the exchange server 200 over the communication network. The kiosk receives a request from a user, and transmits cryptocurrency selling request information to the exchange server 200.

More specifically, the kiosk generates cryptocurrency selling request information to request the selling of a cryptocurrency held in an electronic wallet or the buying of a cryptocurrency using fiat currency held in the electronic wallet, in response to a request from the user.

As occasion demands, the ATM or the kiosk may buy marketable securities (gift card) by using fiat currency obtained by selling a cryptocurrency held in the electronic wallet in response to a request from the user, and may provide the marketable securities to the user.

As described above, a user may access the exchange server 200 through the user terminal 100 and process the trading of a cryptocurrency, but may access the exchange server 200 through the ATM or the kiosk and process the trading of a cryptocurrency.

Referring to FIGS. 1 to 3, the electronic financial transaction system according to the present disclosure includes the exchange server 200.

The exchange server 200 is a configuration that provides a cryptocurrency transaction service through which a cryptocurrency may be bought or sold to the user terminal 100 accessed thereto over the communication network.

The exchange server 200 provides an electronic financial transaction service using a cryptocurrency in order to increase the utilization of a cryptocurrency registered with an account of a user.

The exchange server 200 processes a settlement price by using a cryptocurrency by applying a real-time market price of the cryptocurrency, registered by a user, in response to a request from the user who wants to perform settlement for online shopping or offline shopping by using a cryptocurrency.

To this end, upon request from the user terminal 100, the exchange server 200 analyzes a settlement price, an account transfer amount, and the quantity of a cryptocurrency corresponding to an electronic financial transaction, such as a cash withdrawal amount, based on a real-time market price of the cryptocurrency registered by a user, and settles the electronic financial transaction based on the quantity of the cryptocurrency.

More specifically, when receiving a request for an account transfer from the user terminal 100, the exchange server 200 changes, into fiat currency, the quantity of a cryptocurrency corresponding to an account transfer amount through an electronic financial transaction, and transfers the fiat currency to a financial account input by the user terminal 100. In this case, the exchange server 200 performs the account transfer so that the account transfer amount is remitted from a holding financial account to the financial account designated by the user.

Furthermore, when receiving a request for cash withdrawal through an ATM, the exchange server 200 changes, into fiat currency, a cryptocurrency having a quantity corresponding to a cash withdrawal amount through an electronic financial transaction, and transfers the fiat currency to a previously designated withdrawal account. As occasion demands, if sufficient fiat currency for cash withdrawal is present in an electronic wallet of a user who has requested the cash withdrawal, the exchange server 200 may be configured to receive, from the user, a confirmation for whether to sell a cryptocurrency.

Moreover, the exchange server 200 may provide a cybermoney exchange service for exchanging a cryptocurrency and cybermoney in response to a request from the user terminal 100 accessed thereto over the communication network. To this end, the exchange server 200 establishes a business partnership with a company that operates cybermoney, and assigns an electronic wallet to each company. Furthermore, the exchange server 200 changes a cryptocurrency into cybermoney by applying a real-time market price of the cryptocurrency registered by a user in response to a request from the user who wants to perform the exchange.

As described above, the exchange server 200 changes, into cybermoney, a cryptocurrency having a quantity corresponding to an exchange amount through an electronic financial transaction requested by a user, and registers the cybermoney with an electronic wallet of the user.

In this case, the exchange server 200 may register, with an electronic wallet of a company, the cryptocurrency used for the exchange with the cybermoney without any change based on a selection of the company that has provided the cybermoney. Furthermore, the exchange server 200 may prepare fiat currency by selling the cryptocurrency used for the exchange with the cybermoney, and may transfer the fiat currency to a financial account registered with the electronic wallet of the company or registered by the company, in response to a request the company.

The exchange server 200 may provide an intercryptocurrency exchange service for exchanging a cryptocurrency and another cryptocurrency in response to a request from the user terminal 100 accessed thereto over the communication network. To this end, the exchange server 200 exchanges a first cryptocurrency, registered by a user, and a second cryptocurrency selected by the user by applying a real-time market price of the cryptocurrency in response to a request from the user who wants to exchanges the cryptocurrencies. More specifically, the exchange server 200 sells the first cryptocurrency registered by the user at a real-time market price, buys the second cryptocurrency having a quantity corresponding to an exchange amount, and registers the quantity of the second cryptocurrency with an electronic wallet of the user.

Meanwhile, when receiving transaction request information from the commercial transaction management server 400 over the communication network, the exchange server 200 settles a settlement price by using a cryptocurrency having a quantity corresponding to the settlement price among cryptocurrencies held in an electronic wallet associated with a personal identification code, in response to a request from the commercial transaction management server 400. To this end, the exchange server 200 provides the cryptocurrency, corresponding to the settlement price, to an account designated by the commercial transaction management server 400 or the electronic wallet or provides fiat currency, prepared by selling the cryptocurrency, to the account or the electronic wallet. Specifically, if fiat currency is designated for the settlement of a settlement price, the exchange server 200 prepares the settlement price by selling cryptocurrency of a user at a real-time market price, and provides the settlement price to the seller. In this case, although the user requests settlement related to a commercial transaction through the user terminal 100, if the cryptocurrency owned by the user is not sold to other people, the settlement of the electronic financial transaction is cancelled. In other words, if the seller selects fiat currency to be provided as a settlement price, there is a problem in that the purchase of a product or a service is cancelled if the cryptocurrency owned by the user is not transacted through a cryptocurrency exchange.

As described above, if a cryptocurrency owned by a user is not transacted, the user terminal 100 may transmit, to the exchange server 200, a purchase subscription signal for a commercial transaction. In this case, the exchange server 200 processes the settlement of a settlement price so that a product or service subscribed to be purchased is bought immediately when the cryptocurrency owned by the user is sold at a real-time market price.

As occasion demands, the exchange server 200 receives a subscription for the selling of a cryptocurrency from a first customer who wants to buy a cryptocurrency at a pre-designated price, and generates a waiting list. Furthermore, when a selling price of the cryptocurrency is identical with the pre-designated price of the first customer, the exchange server 200 buys the cryptocurrency and registers the cryptocurrency with an electronic wallet of the first customer. In this case, when receiving a settlement request for an electronic financial transaction from the user terminal 100, the exchange server 200 sells the cryptocurrency owned by the user at the highest purchase price among subscribed prices.

Moreover, when receiving a request for the return (refund) of a product or service whose settlement has been calculated through the user terminal 100, the exchange server 200 may be configured to buy a coin, used for the balance accounts of a settlement price, again by using fiat currency provided to a seller and to register the coin with an electronic wallet of a buyer. In this case, if a transaction price of a cryptocurrency at timing at which the buyer bought the product or service is different from a transaction price of the cryptocurrency at timing when the buyer requested the return, the quantity of the cryptocurrency registered with the electronic wallet of the buyer is different.

Of course, when the return of the product or service is requested, the exchange server 200 may register fiat currency, corresponding to a refunded settlement price, with the electronic wallet of the buyer instead of the cryptocurrency depending on the buyer's selection.

In order to induce a member to use an electronic wallet, the exchange server 200 may be configured to generate and provide an electronic wallet to a user who accesses the exchange server 200 through the user terminal 100 and is joined as a member.

Specifically, the exchange server 200 generates and provides a first electronic wallet and a second electronic wallet to a user joined as a member. In this case, the first electronic wallet and the second electronic wallet may be formed to have different colors so that the user can clearly distinguish between the first electronic wallet and the second electronic wallet. For example, the first electronic wallet may be indicated in red, and the second electronic wallet may be indicated in yellow.

Furthermore, when receiving cryptocurrency registration information from the user terminal 100, the exchange server 200 registers a cryptocurrency with the first electronic wallet. When a cryptocurrency is distributed to the user free of charge, the exchange server 200 registers the free distributed cryptocurrency with the second electronic wallet, and limits a movement of the cryptocurrency between the first electronic wallet and the second electronic wallet. The reason for this is that an interoperation between the airdropped cryptocurrency and a cryptocurrency purchased by paying a price.

As occasion demands, the exchange server 200 may generate and provide a third electronic wallet to an interested person of a cryptocurrency development company among users joined as members. Such a third electronic wallet registers a cryptocurrency provided in response to a request from the cryptocurrency development company, and may be configured to be indicated in blue.

In this case, the exchange server 200 may provide a lock function for limiting the use of the cryptocurrency registered with the electronic wallet for a given time. The lock function means a function for limiting a selling period so that a cryptocurrency obtained free of charge as in the second electronic wallet or the third electronic wallet can be sold after a given period.

Meanwhile, if a cryptocurrency registered with an electronic wallet of the exchange server 200 is a cryptocurrency using a proof of stake (POS) method, the exchange server 200 may provide an interest (fiat currency) to an electronic wallet of a user based on the quantity of a cryptocurrency owned by the user or may provide a newly generated coin to the electronic wallet of the user based on a share ratio as an allotment concept. As occasion demands, upon allotment, the exchange server 200 may change a cryptocurrency into cybermoney having a stable price, etc., and may pry the cybermoney.

The exchange server 200 may change, into fiat currency, a cryptocurrency having a quantity corresponding to a settlement price in response to a request from a seller, that is, a commercial transaction target with a user, and may calculate the settlement price by using the fiat currency. In this case, the exchange server 200 may deposit the fiat currency into a bank account of an individual when the seller is the individual, and may deposit the fiat currency into a bank account of a corporate body when the seller is the corporate body.

The exchange server 200 receives an application for a member store subscription through which a cryptocurrency settlement service can be used from the first seller terminal 310 and the second seller terminal 320 accessed thereto over the communication network. Furthermore, the exchange server 200 receives a method of providing a settlement price to a first seller and a second seller who have been joined as member stores.

Specifically, when the first and second sellers access the exchange server 200 through the first and second sellers terminals 310 and 320 and request a cryptocurrency, settled by a user, to be provided to electronic wallets of the sellers, the exchange server 200 generates the electronic wallets and provides the cryptocurrency to the electronic wallets of the first and second sellers. Furthermore, if the settlement of a product is determined as the provision of a cryptocurrency in response to a request from a user, that is, a buyer, or a request from a seller, the exchange server 200 transfers a cryptocurrency, having a quantity corresponding to a settlement price of a product, from an electronic wallet of the buyer to an electronic wallet of the seller in which selling information of the product has been registered.

If the best suitable cryptocurrency to which a settlement price discount function has been assigned is present among cryptocurrencies of a user according to the commercial transaction, the exchange server 200 may be configured to calculate a discounted settlement price by using the best suitable cryptocurrency.

If the use of a cryptocurrency registered in relation to a commercial transaction among electronic financial transactions is previously set in order of earnings rates, the exchange server 200 is configured to calculate a settlement price by using a cryptocurrency having the greatest earnings rate. In this case, the order of earnings rates may be determined based on earnings rates within a pre-designated period from the present.

The exchange server 200 may autonomously construct an online shopping mall in order to provide a settlement service for a commercial transaction online. In this case, the exchange server 200 is configured to display, in a web page, selling information of a product registered with the online shopping mall. The online shopping mall performs a function for guiding various selling articles and services and also guiding the settlement of an article and service, selected by a customer, in response to a request.

The exchange server 200 may provide a game function for enabling a cryptocurrency, owned by an individual, to be used for game.

Specifically, the exchange server 200 generates a game room having a pre-designated purpose, and stores betting amount information betted by game participants who have entered the game room. Furthermore, the exchange server 200 withdraws, from electronic wallets of the game participants, betting amounts corresponding to the betting amount information based on game results in the game room.

For example, the exchange server 200 collects, from a participant, betting amount information using a cryptocurrency as in Lotto or bingo game, extracts a prizewinner among the participants, and provides prize money or a winner product to the prizewinner. In this case, the prizewinner may be a game winner in game in which the participants compete with each other, and may be a raffle winner selected in game in a lottery manner.

The prize money may be the quantity of a cryptocurrency obtained by adding all betting amounts betted by the game participants. Furthermore, the winner product may be an expensive product or service having a value several tens of times higher than a betting amount which may be betted by one game participant.

Such prize money may be provided to an electronic wallet of a prizewinner as a cryptocurrency, and may be changed into fiat currency and provided to the electronic wallet of the prizewinner. As occasion demands, the prize money may be transferred to a bank account designated by a prizewinner.

Furthermore, the exchange server 200 may calculate a settlement price as a cryptocurrency in association with external web sites that provide services, such as online betting game, online game item payment, online ticketing for sports or movie watching, a coin financial transaction, the purchase of bank securities, and a real estate transaction. In this case, in the cryptocurrency settlement, a cryptocurrency used for the balance accounts is provided without any change or a cryptocurrency used for balance accounts is changed into fiat currency and provided in response to a request from an associated web site.

As occasion demands, the exchange server 200 may provide reserved points to an electronic wallet based on cryptocurrency transaction performance or product or service purchase performance using a cryptocurrency, of a customer. Furthermore, the exchange server 200 may also provide a mobile settlement service (pay service) using a mobile card operating in conjunction with an electronic wallet of a customer so that electronic financial transaction settlement through a mobile can be easily performed.

As described above, the exchange server 200 generates a game agency, provides a game space to a customer who wants to play game, and induces the customer to play game by using a cryptocurrency in the game agency. In this case, a game betting amount in the game agency may be paid through reserved points or a mobile settlement service. Furthermore, the exchange server 200 may change a cryptocurrency held in an electronic wallet into fiat currency or cybermoney having a stable price, and may provide the fiat currency or cybermoney as a game betting amount.

The exchange server 200 may be configured to receive investment for a cryptocurrency from a financial company and to operate the investment.

To this end, the exchange server 200 is provided with cryptocurrency investment information and fiat currency from a financial company server, buys a cryptocurrency corresponding to the cryptocurrency investment information, and registers the cryptocurrency with an electronic wallet of the financial company. Furthermore, when a profit ratio corresponding to the cryptocurrency investment information is reached, the exchange server 200 may sell the cryptocurrency held in the electronic wallet of the financial company.

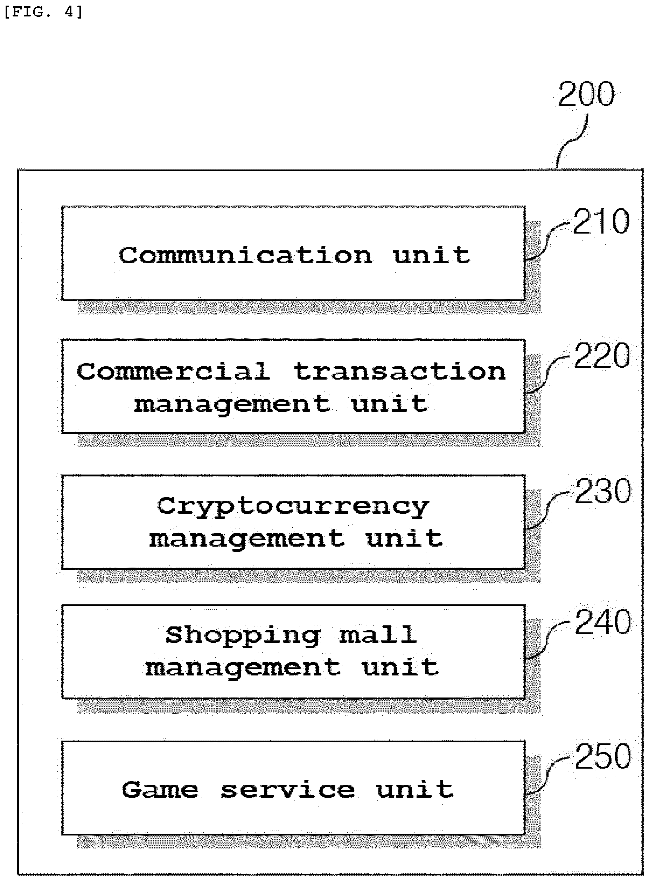

FIG. 4 is a configuration diagram for describing an embodiment of the exchange server 200 according to the present disclosure. Referring to FIG. 4, the exchange server 200 according to the present disclosure may be configured to include a communication unit 210, a commercial transaction management unit 220, a cryptocurrency management unit 230, a shopping mall management unit 240, and a game service unit 250.

The communication unit 210 is a configuration that is connected to the user terminal 100, the commercial transaction management server 400, or the settlement agency server 500 over the communication network and that transmits and receives data. The communication unit 210 provides a function for receiving cryptocurrency transaction information from the user terminal 100 and receiving transaction request information transmitted by the commercial transaction management server 400 or the settlement agency server 500.

The commercial transaction management unit 220 provides a function for calculating settlement for online or offline product purchase as a cryptocurrency in response to a request from the commercial transaction management server 400 or the settlement agency server 500.

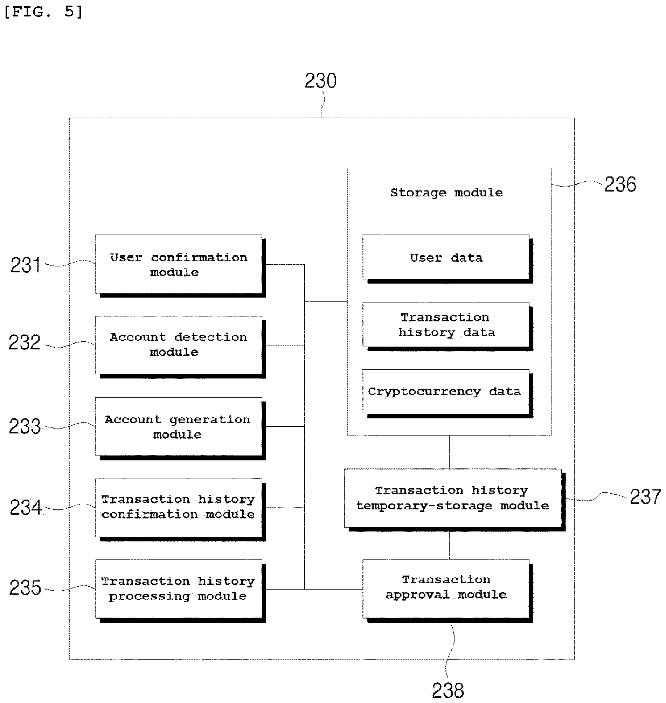

FIG. 5 is a configuration diagram for describing an embodiment of the cryptocurrency management unit according to the present disclosure.

The cryptocurrency management unit 230 is a configuration that manages cryptocurrency transactions, such as a buy order and a selling order. The cryptocurrency management unit 230 may include a user confirmation module 231, an electronic wallet detection module 232, an electronic wallet generation module 233, a transaction history confirmation module 234, a transaction history processing module 235, a storage module 236, a transaction history temporary-storage module 237, and a transaction approval module 238.

The user confirmation module 231 is a configuration that confirms whether a user who accesses the exchange server 200 through the user terminal 100 is a customer joined as a member.

The electronic wallet detection module 232 is a configuration that detects an electronic wallet owned by a user confirmed by the user confirmation module 231.

The electronic wallet generation module 233 is a configuration that generate electronic wallet information including a cryptocurrency registered with an electronic wallet detected by the electronic wallet detection module 232 and that provides the electronic wallet information to a transaction-dedicated app installed in the user terminal 100.

The transaction history confirmation module 234 is a configuration that confirms a cryptocurrency transaction history (remittance, withdrawal, etc.) performed through a transaction-dedicated app installed in the user terminal 100.

The transaction history processing module 235 is a configuration that updates an amount, corresponding to a cryptocurrency registered with an electronic wallet owned by a user, based on a cryptocurrency transaction history confirmed by the transaction history confirmation module 234.

The storage module 236 is a configuration that stores cryptocurrency transaction history information, an electronic wallet owned by a user, and registered cryptocurrency amount information.

The transaction history temporary-storage module 237 is a configuration that temporarily stores a changed amount, corresponding to a cryptocurrency, in an electronic wallet updated by the transaction history processing module 235 until the changed amount is approved.

The transaction approval module 238 is a configuration that approves a cryptocurrency transaction history confirmed by the transaction history confirmation module 234.

The shopping mall management unit 240 is a configuration that operates an online shopping mall so that an article and a service sold in an online shopping mall constructed in the exchange server 200 can be read online. The shopping mall management unit 240 provides a function for guiding various articles and services selling in the online shopping mall and performing the settlement of an article and a service selected by a customer in response to a request. To this end, the shopping mall management unit 240 includes a database unit.

The database unit stores, as a list, purchase product-related information including a purchase product name, the order number and purchase amount of a product or service bought by a member.

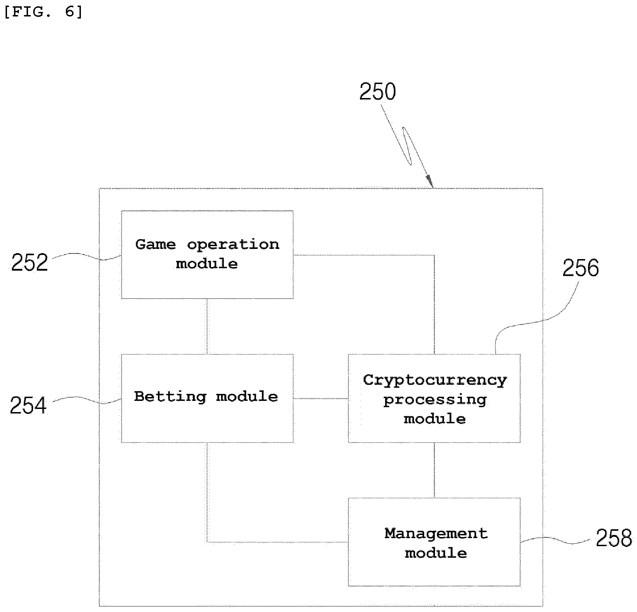

FIG. 6 is a configuration diagram for describing an embodiment of the game service unit according to the present disclosure.

The game service unit 250 is a configuration that generates a game room in response to a request from the user terminal 100 and that stores betting amount information selected by game participants who have entered the game room. The game service unit 250 withdraws, from electronic wallets of the game participants, a betting amount corresponding to the betting amount information based on the results of game in the game room, and provides the betting amount to an electronic wallet of a game winner. In this case, the game service unit 250 may change the betting amount into cybermoney or fiat currency having a stable price instead of a cryptocurrency, and may provide the cybermoney or fiat currency to the game winner.

Specifically, the game service unit 250 includes a game operation module 252, a betting module 254, a cryptocurrency processing module 256, and a management module 258.

The game operation module 252 is a configuration that generates a game room in response to a request from the user terminal 100 and that collects information of game participants who have entered the game room. The game operation module 252 executes game selected by the game participants while operating in conjunction with the betting module 254, the cryptocurrency processing module 256, and the management module 258.

The game operation module 252 searches for a waiting game room and guides a gamer to access a corresponding game room. The game operation module 252 provides betting information and game information to a game participant who has entered the game room by outputting a betting box to the game participant, and starts game when a betting amount is deposited through the betting box.

The betting module 254 is a configuration that stores betting amount information selected by game participants who have entered a game room and that processes a dividend operation. The betting module 254 processes a process of expecting, by a game participant, game results and betting his or her own cryptocurrency, as if a game participant expects game results and bets points owned by the game participant, etc. in a common betting game.

The cryptocurrency processing module 256 processes a cryptocurrency operation transaction on a betting amount and a dividend, and processes settlement processing and balance accounts on a betted cryptocurrency.

The management module 258 is a configuration that processes cryptocurrency management, member management, etc.

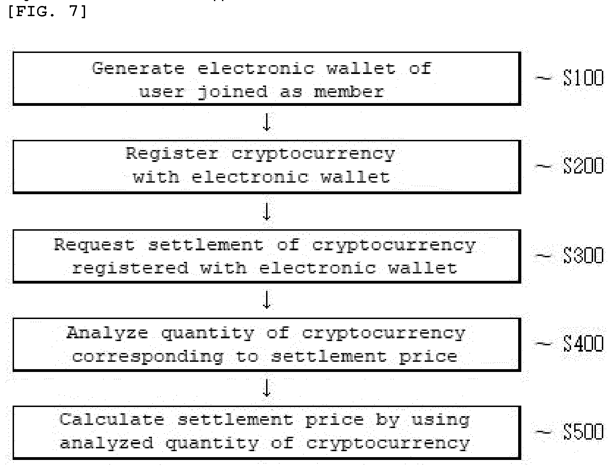

FIG. 7 is a flowchart illustrating a flow of a balance accounts method for electronic financial transactions according to the present disclosure. Referring to FIG. 7, a method of calculating an electronic financial transaction using the electronic financial transaction system according to the present disclosure includes an electronic wallet generation step S100, a cryptocurrency registration step S200, a balance accounts request step S300, a quantity analysis step S400, and a balance accounts step S500.

The electronic wallet generation step S100 is a step of generating and providing, by the exchange server 200, an electronic wallet to a user registered as a member through the user terminal 100. In the present step S100, when the user terminal 100 accesses the exchange server 200 and requests a member subscription, the exchange server 200 performs a member subscription procedure, generates an electronic wallet, and provides the electronic wallet to a user joined as a member.

The cryptocurrency registration step S200 is a step of registering, by the exchange server 200, a cryptocurrency with the electronic wallet in response to a request from the member. In the present step S200, when the user terminal 100 accesses the exchange server 200 and requests a cryptocurrency to be registered with the provided electronic wallet, the exchange server 200 performs a cryptocurrency registration procedure and then registers the cryptocurrency with the electronic wallet.

More specifically, when receiving a purchase request signal for a cryptocurrency through the user terminal 100, the exchange server 200 receives fiat currency transferred by the user through the electronic wallet and applies for a buy order for a cryptocurrency desired by the user. Furthermore, when the buy order is concluded, the exchange server 200 provides the cryptocurrency to the electronic wallet and recovers fiat currency corresponding to the cryptocurrency.

The balance accounts request step S300 is a step of requesting, by the user terminal 100 that has accessed the exchange server 200 in which an online shopping mall has been constructed, settlement using the cryptocurrency registered with the electronic wallet in relation to an electronic financial transaction. In the present step S300, when the user inputs a product or a service to be purchased in the online shopping mall, the user terminal 100 transmits transaction request information to the exchange server 200.

The quantity analysis step S400 is a step of analyzing, by the exchange server 200, the quantity of a cryptocurrency corresponding to a settlement price for the electronic financial transaction based on a real-time market price of the cryptocurrency whose settlement has been requested. In the present step S400, when receiving settlement request information from the user terminal 100, the exchange server 200 analyzes the quantity of the cryptocurrency, corresponding to a target price for the electronic financial transaction, based on a real-time market price of the cryptocurrency whose settlement has been requested.

The balance accounts step S500 is a step of calculating, by the exchange server 200, the settlement price by using the quantity of a cryptocurrency among cryptocurrencies registered with the electronic wallet. In the present step S500, when the quantity of a cryptocurrency corresponding to a target price is determined through the quantity analysis step, the exchange server 200 subtracts the quantity of the cryptocurrency from the electronic wallet and then calculates the target price by using the subtracted quantity of the cryptocurrency.

In the balance accounts step S500, the exchange server 200 may change, into fiat currency, the quantity of a cryptocurrency corresponding to a target price, and may calculate a target price for an electronic financial transaction by using the fiat currency.

In the balance accounts step S500, the exchange server 200 may transfer the quantity of a cryptocurrency, corresponding to a target price, from the electronic wallet of the user to an account transfer bank, a cash withdrawal bank or an electronic wallet of a commercial transaction seller.

Although the preferred embodiments of the present disclosure have been described above, those skilled in the art will understand that the present disclosure may be modified and changed in various ways without departing from the spirit and scope of the present disclosure written in the appended claims.

## Claims

1. An electronic financial transaction system using cryptocurrency, comprising:
a user terminal which requests an electronic financial transaction using a cryptocurrency registered by a user; and
an exchange server which analyzes a quantity of the cryptocurrency, corresponding to a target price for an electronic financial transaction, based on a real-time market price of the cryptocurrency registered by the user in response to a request from the user terminal and calculates the electronic financial transaction by using the quantity of the cryptocurrency.

2. The electronic financial transaction system of claim 1, wherein the exchange server
changes, into fiat currency, a quantity of the cryptocurrency corresponding to an account transfer amount through the electronic financial transaction, and
transfers the fiat currency to a financial account input by the user terminal.

3. The electronic financial transaction system of claim 1, wherein the exchange server
changes, into fiat currency, a quantity of the cryptocurrency corresponding to a settlement price for a commercial transaction through the electronic financial transaction, and
calculates the settlement price by using the fiat currency.

4. The electronic financial transaction system of claim 3, wherein the exchange server is configured to calculate the settlement price discounted as a best suitable cryptocurrency when the best suitable cryptocurrency to which a settlement price discount function has been assigned is present according to the commercial transaction among cryptocurrencies of the user.

5. The electronic financial transaction system of claim 3, wherein the exchange server is configured to calculate the settlement price by using a cryptocurrency having a greatest earnings rate when a use of a cryptocurrency registered in relation to the commercial transaction is previously set in order of earnings rates.

6. The electronic financial transaction system of claim 5, wherein the order of the earnings rates is an earnings rate within a pre-designated period from a present.

7. The electronic financial transaction system of claim 1, wherein:
the exchange server changes, into fiat currency, a quantity of the cryptocurrency corresponding to cash withdrawal amount through an electronic financial transaction and transfers the fiat currency to a pre-designated withdrawal account, and
the electronic financial transaction system further comprises an automated teller machine which recognizes a personal identification code having rights to access the withdrawal account, assigns withdrawal rights, and provides, as cash, an amount input within a limit amount of the withdrawal account.

8. The electronic financial transaction system of claim 7, wherein the personal identification code is recognized through a QR code or a barcode.

9. The electronic financial transaction system of claim 1, wherein the exchange server is configured to generate and provide an electronic wallet to a user who accesses the exchange serve through the user terminal and joins the exchange serve as a member.

10. The electronic financial transaction system of claim 9, wherein the user terminal
transmits, to the exchange server, cryptocurrency registration information on which a cryptocurrency is registered with the electronic wallet, and
transmits, to the exchange server, transaction request information for requesting a settlement of an electronic financial transaction by using the cryptocurrency registered with the electronic wallet.

11. The electronic financial transaction system of claim 9, wherein the exchange server
generates and provides a first electronic wallet and a second electronic wallet to the user who has been joined as a member,
registers a cryptocurrency with the first electronic wallet when receiving cryptocurrency registration information from the user terminal,
registers, with the second electronic wallet, a cryptocurrency distributed free of charge when the cryptocurrency is distributed to the user free of charge, and
limits a movement of a cryptocurrency between the first electronic wallet and the second electronic wallet.

12. The electronic financial transaction system of claim 9, wherein the exchange server
changes, into cybermoney, a quantity of the cryptocurrency corresponding to an exchange amount through an electronic financial transaction requested by the user, and
registers the cybermoney with the electronic wallet of the user.

13. The electronic financial transaction system of claim 9, wherein the exchange server
analyzes a price of a quantity of a cryptocurrency to be transacted based on a real-time market price of the cryptocurrency in response to a request from the user terminal, and
calculates a purchase price of the cryptocurrency by using fiat currency held in the electronic wallet in response to a purchase approval request for the quantity of the cryptocurrency.

14. The electronic financial transaction system of claim 9, wherein the exchange server
recognizes a personal identification code having rights to access the electronic wallet,
buys a cryptocurrency in response to a transaction request signal when receiving the transaction request signal for the cryptocurrency through an automated teller machine or a kiosk that has accessed the electronic wallet, and
registers the cryptocurrency with the electronic wallet or sells a cryptocurrency held in the electronic wallet.

15. The electronic financial transaction system of claim 9, wherein:
the exchange server constructs an online shopping mall and displays, in a web page, selling information of a product registered with the online shopping mall, and
the electronic financial transaction system further comprises a first seller terminal which accesses the exchange server, registers selling information of a product to be sold in the online shopping mall, and designates an electronic wallet of a first seller through which a cryptocurrency corresponding to a settlement price of the product is able to be calculated.

16. The electronic financial transaction system of claim 15, wherein the exchange server provides, to the electronic wallet of the first seller, a quantity of a cryptocurrency corresponding to a settlement price related to a purchase of a product through an electronic financial transaction or fiat currency changed into the cryptocurrency.

17. The electronic financial transaction system of claim 9, further comprising:
a second seller terminal which recognizes a personal identification code associated with the electronic wallet and transmits selling information comprising the personal identification code, a settlement amount, and a settlement amount-receiving address; and
a settlement agency server which relays the selling information,
wherein the exchange server transfers a quantity of a cryptocurrency, corresponding to a settlement amount, or fiat currency changed into the cryptocurrency from an electronic wallet, associated with the personal identification code of the selling information received from the settlement agency server, to the settlement amount-receiving address.

18. The electronic financial transaction system of claim 9, wherein the exchange server is configured to:
generate a game room, store betting amount information selected by game participants who have entered the game room, and
extract a prizewinner among the game participants based on results of game in the game room.

19. The electronic financial transaction system of claim 18, wherein the exchange server is configured to comprise a game service unit which generates a game room in response to a request from the user terminal, stores betting amount information selected by game participants who have entered the game room, withdraws, from electronic wallets of the game participants, a betting amount corresponding to the betting amount information based on results of game in the game room, and provides the betting amount to an electronic wallet of a game winner.

20. A settlement method using an electronic financial transaction system, comprising:
an electronic wallet generation step of generating and providing, by an exchange server, an electronic wallet to a user who accesses the exchange server through a user terminal and is registered as a member;
a cryptocurrency registration step of registering, by the exchange server, a cryptocurrency with the electronic wallet in response to a request from the member;
a payment request step of requesting, by the user terminal that has accessed the exchange server in which an online shopping mall has been constructed, settlement using the cryptocurrency registered with the electronic wallet in relation to a commercial transaction during an electronic financial transaction;
a quantity analysis step of analyzing, by the exchange server, a quantity of a cryptocurrency corresponding to a settlement price for a commercial transaction based on a real-time market price of the cryptocurrency whose settlement has been requested; and
a balance accounts step of calculating, by the exchange server, the settlement price by using the quantity of the cryptocurrency among cryptocurrencies registered with the electronic wallet.

21. The settlement method of claim 20, wherein the balance accounts step comprises:
changing, by the exchange server, the quantity of the cryptocurrency corresponding to the settlement price into fiat currency, and
calculating the settlement price by using the fiat currency.

22. The settlement method of claim 20, wherein the balance accounts step comprises transferring, by the exchange server, a quantity of a cryptocurrency corresponding to a settlement price from an electronic wallet of a buyer to an electronic wallet of a commercial transaction seller.
